# EUROPÄISCHE PATENTSCHRIFT

(11) **EP 1 053 854 B1**
(45) Veröffentlichungstag und Bekanntmachung des Hinweises auf die Patenterteilung: **26.03.2003**
(21) Anmeldenummer: 00110010.6
(22) Anmeldetag: 12.05.2000
(51) Int. Cl.: B29C 47/68, B29C 47/92, B29C 47/08

(54) **Filtereinrichtung für die Reinigung von Kunststoffschmelzen**
Filter device for cleaning plastic melts
Dispositif de filtrage pour la purification de matières plastiques fondues

(30) Priorität: 18.05.1999 DE 29908735 U
(43) Veröffentlichungstag der Anmeldung: 22.11.2000
(73) Patentinhaber: ARTEVA TECHNOLOGIES S.à.r.l., 8001 Zürich (CH)
(72) Erfinder: Schaller, Rainer, Dr., 86637 Weringen (DE); Lindner, Eduard, 86465 Heretsried (DE); Henke, Ralf, 63584 Gründau (DE); Gneuss, Detlef, 32549 Bad Oeynhausen (DE)
(74) Vertreter: Zounek, Nikolai, Dipl.-Ing.

(56) Entgegenhaltungen:
- US-A- 5 090 887
- US-A- 5 536 399
- "PROBLEM SOLUTIONS FOR ALL FIELDS OF APPLICATION" PV INTERNATIONAL PLASTICS MAGAZINE,DE,ZECHNER UND HUETHIG VERLAG, Bd. 3, Nr. 2, 1. Oktober 1992 (1992-10-01), Seiten 68,71-72, XP000393848
- PATENT ABSTRACTS OF JAPAN vol. 1996, no. 10, 31. Oktober 1996 (1996-10-31) & JP 08 156072 A (TANAKA KAZUYUKI), 18. Juni 1996 (1996-06-18)

## Beschreibung

Die Erfindung betrifft eine Filtereinrichtung für die Reinigung von Kunststoffschmelzen, mit einem Filterrad zum Ein- und Ausschwenken von Siebelementen in bzw. aus einem von der Kunststoffschmelze durchströmten Schmelzekanal in der Filtereinrichtung, wobei die Siebelemente in dem Filterrad angeordnete Kavitäten abdecken, und an einer Aus-/Einbauöffnung der Filtereinrichtung gegen frische oder gereinigte Siebelemente austauschbar sind, mit Drucksensoren in einer Schmelzezuflußleitung vor dem Filterrad und Drucksensoren in einer Schmelzeabflußleitung nach dem Filterrad, wobei die Schmelzezu- und -abflußleitung jeweils mit dem Schmelzekanal in der Filtereinrichtung in Verbindung stehen.

Aus dem Dokument "Problem solutions for all fields of application", PV International Plastics Magazine Volume 3, 1992, No. 2, Zechner und Huething Verlag, Speyer, Deutschland ist eine Filtereinrichtung der eingangs beschriebenen Art bekannt. Die Druckdifferenzüber dem Filterrad wird mit-Drucksensoren gemessen, die in einer Zufluß- und Abflußleitung für die Schmelze angeordnet sind. Diese Drucksensoren sind zwar nicht explizit in dem Dokument beschrieben, ergeben sich jedoch als technische Notwendigkeit, da die Druckdifferenz über dem Filterrad gemessen wird, wie in dem Dokument angeführt ist.

In der DE- 41 13 501 A1 sind Siebelemente in Durchbrechungen einer Schwinge oder einer Scheibe beschrieben, die durch Schwenken bzw. Drehen derselben sowohl in Wirkstellung als auch in eine Entnahmestellung gebracht werden können, wobei sie in der letzteren nach Gebrauch und Zusetzen der Filterschicht gegen neue oder gereinigte Filterflächen aufweisende Siebelemente austauschbar sind.

Das aus der DE 42 12 928 A1 bekannte, kontinuierlich arbeitende Filtersystem verwendet ein Filterrad, das exzentrisch in einem Filtergehäuse von der Monomerschmelze durchströmt wird und mit entlang einem Kreis angeordneten Siebelementen bzw. Filtereinsätzen bestückt ist. Die einzelnen Siebelemente bestehen aus einer Anzahl übereinander angeordneter und parallel zueinander betriebener Filterzellen. Die Filterzellen werden durch jeweils zwei ringförmige Filterscheiben gebildet, deren innere Zonen mit einem zwischengefügten, radiale Durchtrittsöffnungen aufweisenden Ring und deren äußere Randzonen miteinander verbunden sind. Die Filterscheiben sind mehrschichtig aufgebautund weisen mindestens eine Filter- sowie eine diese tragende Stützschicht auf. Die geringen Porenweiten der Filtereinsätze haben eine hohe Reinigungswirkung, wodurch die Qualität des Endproduktes verbessert wird. Das Filterrad ist am Außenumfang mit einem Zahnkranz ausgerüstet, der mit einem Ritzel in Eingriff ist, das über einen Hebel mit einem Antriebkolben verbunden ist, dessen Bewegung von einem Hydrauliksteuersystem gesteuert wird. Gleichzeitig dient die Hydraulikeinrichtung auch für a) den Antrieb des Rückspülkolbens (Accelerator) zur Rückstoßreinigung der Filterzellen mit den Siebelementen und b) den Ausschleusekolben, der im Falle der Rückspülung das Monomer nach außen leitet und im Normalfall wieder zurück zur Schmelzehauptleitung führt. Der Accelerator erzeugt den erforderlichen, kurzzeitig hohen Schmelzestrom für die Rückspülung mit dem notwendigen Druck.

Dabei ergibt sich das Problem, daß es wegen der hohen Temperaturen während des Betriebes leicht zu einer Oxidation des Monomers bzw. Polymers der Kunststoffschmelze während eines Filterwechsels kommen kann. Zur Herabsetzung der Oxidationsgefahr während des Filterwechsels ist es nicht möglich ein Gas in das Filtergehäuse einzublasen, da durch die dann eintretende Abkühlung des Filterrades und der Siebelemente es zu einer Erstarrung der Kunststoffschmelze kommen könnte. Dies würde unweigerlich zur Undichtigkeit der Filter und möglicherweise zu deren Zerstörung führen. Die hohen Temperaturen des Filtergehäuses bewirken auch eine Aufheizung aller angebauten Teile, so daß deren Funktionstüchtigkeit nicht mehr gewährleistet ist. Es kann dabei auch zu einer Überbelastung der Antriebselemente wie beispielsweise des Antriebkolbens kommen. Problematisch ist auch bei der stoßartigen Rückflußreinigung der Siebelemente die geringe mechanische Abstützung des gesamten Filtersystems.

Die Aufgabe der Erfindung besteht demgemäß darin, die eingangs beschriebene Filtereinrichtung so zu verbessern, daß beim Siebelementwechsel die Oxidationsgefahr möglichst ausgeschalten wird, daß Schäden an der Filtereinrichtung durch zu hohe Druckschwankungen und Beeinträchtigungen der Qualität des Filterprodukts durch hohe Betriebstemperaturen weitgehend vermieden werden.

Diese Aufgabe wird erfindungsgemäß in der Weise gelöst, daß eine Schmelzerückführleitung von der Schmelzeabflußleitung abzweigt und über eine Pumpe und eine Ausschleusleitung in einen Rückspülschlitz in der Filtereinrichtung mündet, daß an die Ausschleusleitung ein Accelerator zur stoßweisen Druckerhöhung angeschlossen ist, und daß eine weitere von der Filtereinrichtung wegführende Schmelzerückführ-/Ausschleusleitung über ein 3-Wegeventil mit der Schmelzzuflußleitung oder mit einer Entsorgungsleitung verbunden ist.

In Ausgestaltung der Erfindung weist die Filtereinrichtung zwei Blöcke auf, die durch dazwischen angeordnete Distanzplatten auf Abstand gehalten und mittels Spannbolzen miteinander verbunden sind und ist in dem vorderen Block die Aus-/Einbauöffnung für die Siebelemente angeordnet, die ein Verdrängerblock verschließt, der über eine manuell betätigbare Spindel in die Aus-/Einbauöffnung hinein- und aus dieser herausbewegbar ist.

Die weitere Ausgestaltung des Gegenstandes der Erfindung ergibt sich aus den Merkmalen der Ansprüche 3 bis 13.

Durch die Weiterentwicklung einer bekannten Filtereinrichtung zur on-line-Filtration von Kunststoffschmelzen aus Monomeren wird der Vorteil erzielt, daß der Verunreinigungsgrad wesentlich niedriger ist als im Stand der Technik und daß dadurch verbesserte Eigenschaften des Endproduktes erhalten werden,

Die Erfindung wird im folgenden anhand der Zeichnungen näher beschrieben. Es zeigen:
- Figur 1: schematisch ein Durchflußschema der Filtereinrichtung nach der Erfindung,
- Figur 1a: ein Filterrad im Schnitt entlang der Linie A-A' der Fig. 1,
- Figur 2: einen Schnitt durch die Filtereinrichtung,
- Figur 3: eine Seitenansicht im Schnitt durch die Filtereinrichtung,
- Figur 4: eine Draufsicht auf ein Siebelement der Filtereinrichtung,
- Figur 5: eine Seitenansicht im Schnitt des Siebelements nach Fig. 4 und
- Figur 6: eine Vorlegeplatte für das Siebelement nach Fig. 5.

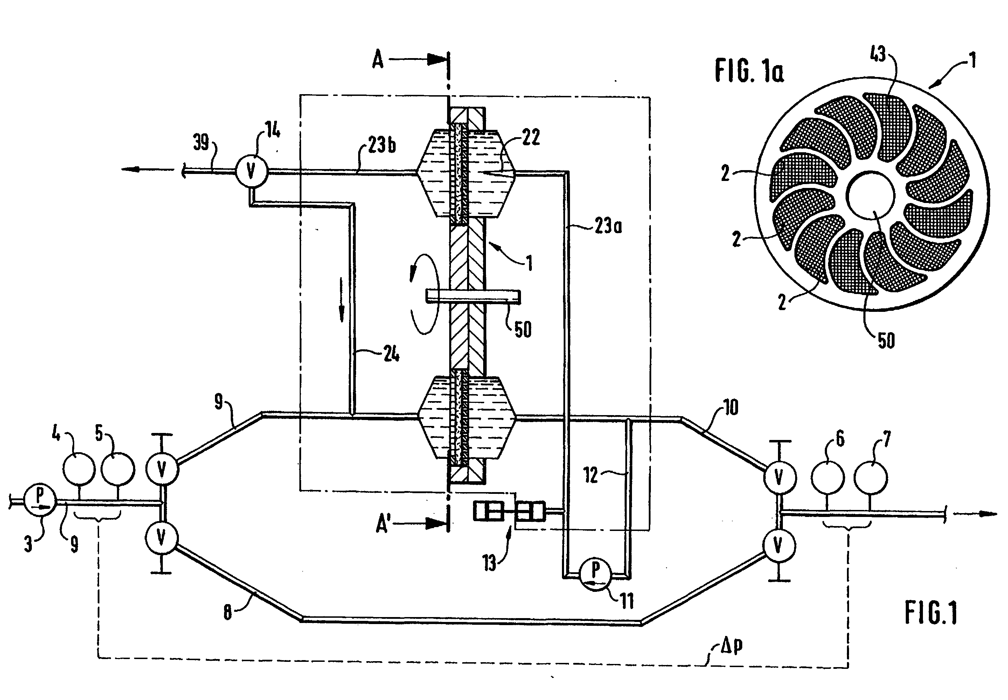

In Fig. 1 ist das Durchflußschema einer Filtereinrichtung nach der Erfindung dargestellt. Wesentlicher Bestandteil der Filtereinrichtung ist ein Filterrad 1, das sich um eine Zentralachse 50 im Gegenuhrzeigersinn dreht. In einer Schmelzezuflußleitung 9 sind Drucksensoren 4, 5 angeordnet, die den Schmelzedruck vor der Filtereinrichtung messen. Eine Pumpe 3, bei der es sich beispielsweise um eine Zahnradpumpe handelt, drückt die Kunststoffschmelze durch die Schmelzezuflußleitung 9 in die Filtereinrichtung, in der die Schmelze in einen Aufgabetrichter eintritt, ein Siebelement durchsetzt und in einem Sammeltrichter gesammelt und über eine Schmelzeabflußleitung 10 ausgeschleust wird. In der Schmelzeabflußleitung 10 befinden sich weitere Drucksensoren 6 und 7, die ebenso wie die Drucksensoren 4 und 5 aus Sicherheitsvorschriften zweifach vorhanden sein müssen. Die Drucksensoren 6 und 7 bestimmen den Druck der Kunststoffs chmelze nach der Filtereinrichtung. Aus den Druckmessungen der Sensoren 4 und 5 einerseits und der Sensoren 6 und 7 andererseits wird eine Druckdifferenz Δp bestimmt. Solange diese Druckdifferenz Δp einen vorgegebenen Wert nicht überschreitet, wird ein Teil der Kunststoffschmelze aus der Schmelzeabflußleitung 10 über eine Schmelzerückführleitung 12 in die Filtereinrichtung zurückgeschleust, Sobald die Druckdifferenz Δp einen vorgegebenen Wert überschreitet, d.h. zu groß ist was gleichbedeutend damit ist, daß die Siebelemente zum größten Teil zugesetzt sind und den hohen Druckverlust verursachen, wird eine Rückspülung der Siebelemente der Filtereinrichtung ausgelöst, wie nachstehend noch beschrieben werden wird. In der Schmelzerückführleitung 12 befindet sich eine Pumpe 11, beispielsweise gleichfalls eine Zahnradpumpe, die die Kunststoffschmelze in eine Ausschleusleitung 23a weiterbefördert.

Falls die Siebelemente der Filtereinrichtung komplett zugesetzt sind, öffnet eine Bypassleitung 8, um die Kunststoffschmelze an der Filtereinrichtung vorbeizuschleusen.

Mit der Ausschleusleitung 23a, die in erster Linie für die Rückspülung der Siebelemente der Filtereinrichtung vorgesehen ist, ist ein Accelerator 13 verbunden. Die Ausschleusleitung 23a mündet in einen Rückspülschlitz 22. Sobald der Accelerator 13 angesteuert wird, erhöht dieser den Druck in der Ausschleusleitung 23a, wobei der Druck durch die Formgebung des Rückspülschlitzes 22 noch zusätzlich verstärkt wird. Durch den hohen Druck bei der Rückspülung werden die in den Siebelementen festgehaltenen Verunreinigungen herausgespült und gelangen über einen gegenüberliegenden Schlitz in eine Schmelzerückführ-/Ausschleusleitung 23b zu einem 3-Wegeventil 14, bei dem es sich um ein Schmelzeausschleusventil handelt. Solange der vorgegebene Wert für die Druckdifferenz Δp nicht überschritten ist, wird die Kunststoffschmelze durch das 3-Wegeventil über eine Rückführleitung 24 in die Schmelzezuflußleitung 9 zurückgeschleust. Wird der vorgegebene Wert für die Druckdifferenz Δp überschritten, so leitetdas 3-Wegeventil 14 die Kunststoffschmelze über eine Entsorgungsleitung 39 ab.

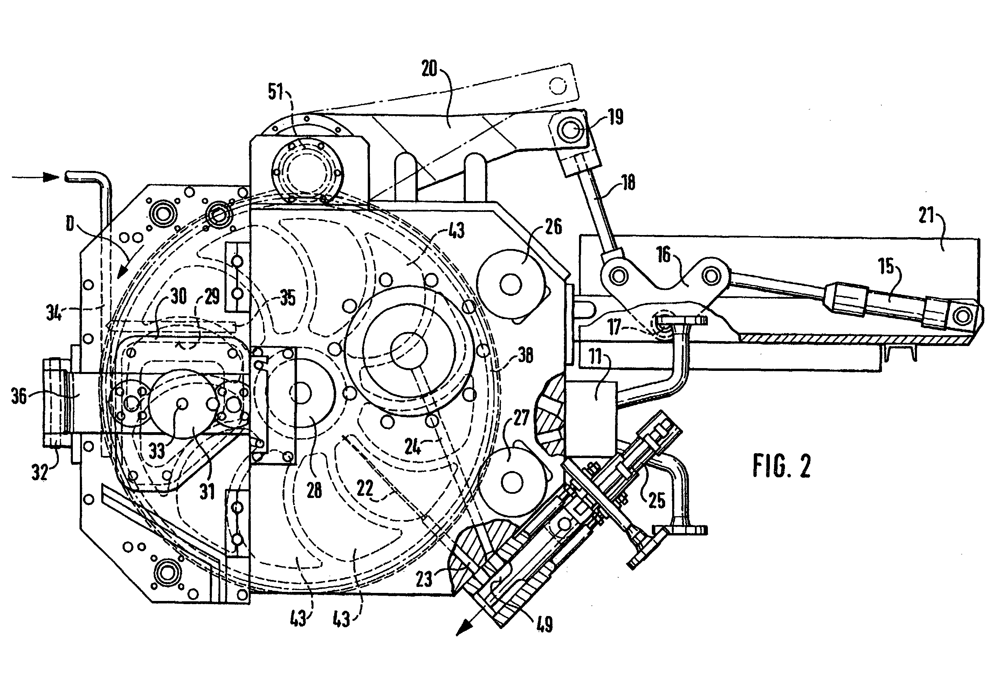

Die Siebelemente der Filtereinrichtung werden durch die aus der Kunststoffschmelze abgeschiedenen Verunreinigungen zugesetzt, so daß sich der Durchtrittswiderstand durch die Siebelemente erhöht. Die Siebelemente, wie nachstehend noch näher beschrieben werden wird, decken Kavitäten 2 (vgl. Fig. 1a) in dem Filterrad 1 ab. Es sind jeweils drei Kavitäten 2 in Wirkverbindung mit einem Schmelzekanal 44, wobei das Filterrad 1 schrittweise während des Betriebes gedreht wird. Von den in Wirkstellung befindlichen drei Kavitäten sind dann zwei, wenn auch in veränderter Stellung, weiterhin mit dem Schmelzekanal 44 (s. Fig. 2) in Verbindung, während ein frisches Siebelement hinzukommt. Somit stehen zwei Siebelemente mit teilweise zugesetzten Filterflächen und ein Siebelement mit freier Filterfläche gleichzeitig und praktisch parallel geschaltet mit dem Schmelzekanal 44 in Verbindung, so daß die an den Siebelementen auftretenden Druckabfälle beim Durchströmen der Kunststoffschmelze nicht so stark schwanken, wie dies beispielsweise beim Austausch eines vollkommen zugesetzten Siebelementes gegen ein frisches Siebelement der Fall ist.

In Fig. 1 sind schematisch zwei Stellungen der Siebelemente angedeutet, nämlich eine untere Stellung der Siebelemente, die mit dem Schmelzekanal in Verbindung sind und die Verschmutzungen aus der Kunststoffschmelze herausfiltern sowie eine Stellung von Siebelementen, die für eine Rückspülung vorgesehen sind.

Fig. 1a zeigt einen Schnitt entlang der Linie A-A' der Fig. 1. In der Draufsicht auf das Filterrad 1 sind die nierenförmigen Siebelemente 43 erkennbar, welche die darunter liegenden Kavitäten 2 abdecken.

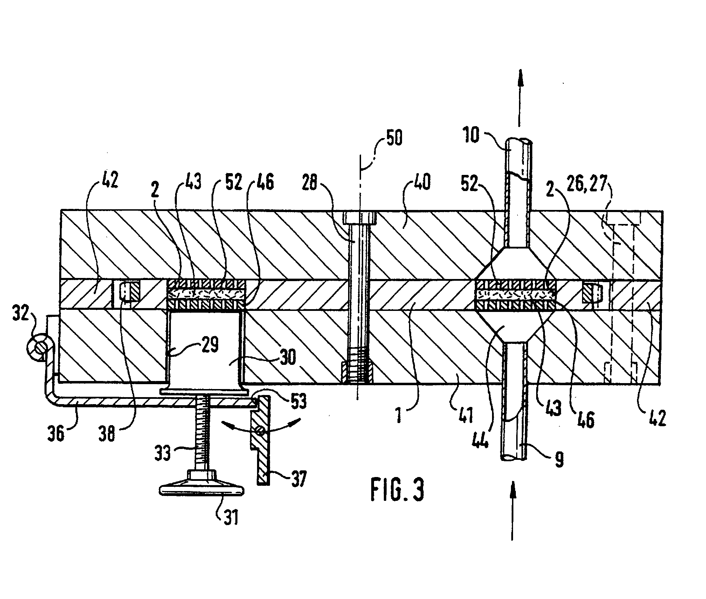

Fig. 2 zeigt einen Schnitt durch die Filtereinrichtung, deren Grundkörper, wie in Fig. 3 dargestellt, aus zwei Blöcken 40, 41 besteht, die von Distanzplatten 42, 42 auf Abstand gehalten werden. Zwischen den Distanzplatten 42, 42 und den Blöcken 40, 41 befindet sich das Filterrad 1, das um eine Zentralachse 50 rotieren kann. Der Außenumfang des Filterrades ist mit einem Zahnkranz 38 ausgerüstet, über den das Filterrad 1, wie anhand von Fig. 2 noch beschrieben werden wird, antreibbarist. Die Blöcke 40,41 sind mit Hilfe von Spannbolzen 26, 27, 28 (s. Fig. 3) gegeneinander verspannt, so daß im Betrieb ein Arbeitsdruck bis zu 50 bar möglich ist. Das Filterrad 1 ist in dem beheizbaren Gehäuse der Filtereinrichtung durch nicht dargestellte Dichtungen, beispielsweise Metalldichtungen, gegen die Blöcke 40, 41 abgedichtet. Die zu filtrierende Kunststoffschmelze wird der Filtereinrichtung über einen Schmelzekanal 44 im vorderen Block 41 zugeführt. Der Schmelzekanal 44 erweitert sich zu einem Aufgabetrichter in Richtung des Filterrades 1, das entlang eines Teilkreises die Kavitäten 2 aufweist, die beispielsweise die nierenförmigen Siebelemente 43 aufnehmen. In Durchflußrichtung der Kunststoffschmelze befindet sich nach den Siebelementen 43 ein Sammeltrichter, der in einen Abflußkanal übergeht, von dem aus die filtrierte Kunststoffschmelze in die Schmelzeabflußleitung 10 gelangt. Die Siebelemente 43 sind mit ihren Spitzen gegen die Zentralachse 50 des Filterrades 1 gerichtet, wie aus Fig. 1a ersichtlich ist. Es befinden sich jeweils drei Kavitäten 2 mit ihren Siebelementen im trichterförmig aufgeweiteten Schmelzekanal 44.

In der Schnittzeichnung der Fig. 2 sind der zentrale Spannbolzen 28 und die beiden rechts von dem Filterrad 1 befindlichen Spannbolzen 26, 27 derFiltereinrichtung zu sehen. Die entlang dem Teilkreis des Filterrads 1 die Kavitäten 2 abschließenden nierenförmigen Siebelemente 43 sind gestrichelt eingezeichnet. Während des Filterbetriebs befinden sich drei Siebelemente 43 im Wirkungsbereich des Aufgabetrichters des Schmelzekanals 44, so daß die drei Kavitäten, die von diesen Siebelementen abgedeckt sind, von der einströmenden Schmelze aufgefüllt werden und von dort die Schmelze durch die Schmelzeabflußleitung 10 abfließt. Nach längerer Betriebszeit beginnen die aus der Schmelze herausgefilterten Partikel und Verunreinigungen die Siebelemente zuzusetzen, wodurch deren Durchtrittswiderstand erhöht wird, d.h. der Druckabfall Δp (vgl. Fig. 1) über der Filtereinrichtung 1 ansteigt. Sobald der Druckabfall Δp einen vorgegebenen Wert übersteigt, wird die Filterscheibe 1 um eine oder mehrere Teilungen des Zahnkranzes in Richtung eines Pfeils D entgegen dem Uhrzeigersinn weitergedreht. Dabei wird das in Drehrichtung des Pfeils Dobere Siebelement43 aus dem Aufgabetrichter herausgeschwenkt, das bisherige mittlere Siebelement 43 bleibt im Wirkungsbereich des Aufgabetrichters und wird zu dem oberen Siebelement, während das bisherige untere Siebelement zu dem mittleren Siebelement und ein frisches bzw. gereinigtes Siebelement als unteres Siebelement in den Bereich des Aufgabetrichters eingeschwenkt wird. Damit stehen zwei Siebelemente 43, die teilweise zugesetzt sind und ein frisches Siebelement 43 für den Filtervorgang zur Verfügung. Auf diese Weise werden zu große Druckschwankungen während der Filtration der Schmelze vermieden, da die auftretenden Druckabfälle weniger stark schwanken als z. B. beim abrupten Wechsel von völlig zugesetztem gegen ein gereinigtes oder neues Siebelement.

Die schrittweise Drehung des Filterrads 1 erfolgt mittels eines Antriebkolbens 15, der auf einer Montageplatte 21 angelenkt ist, die waagerecht an dem Gehäuse der Filtereinrichtung befestigt ist. Der Antriebkolben 15 ist über eine winkelförmige Wippe 16, die um eine Drehachse 17 schwenkbar ist, mit einer Zug/Druckstange 18 verbunden. Die Drehachse 17 der Wippe 16 ist auf der Montageplatte 21 befestigt. Die Zug/Druckstange 18 ist an einem Drehpunkt 19 einer Ratsche 20 angelenkt, die ein Ritzel 51 antreibt, das mit dem Zahnkranz 38 des Zahnrads 1 kämmt. Fährt der Antriebkolben aus, gelangt die Ratsche 20 außer Eingriff mit dem Ritzel 51. Wird andererseits der Antriebkolben 15 eingefahren, befindet sich die Ratsche 20 im Eingriffmit dem Ritzel 51, welches das Filterrad 1 in Richtung des Pfeils D im Gegenuhrzeigersinn weiterdreht.

Durch die Befestigung des Antriebkolbens 15 auf einer waagerechten, U-profilförmigen Montageplatte 21 ist sichergestellt, daß trotz der hohen Temperaturen des Gehäuses der Filtereinrichtung die Wärmebelastung des Antriebkolbens soweit abgesenkt ist, daß seine Funktionstüchtigkeit sichergestellt ist.

Wie schon zuvor erläutert wurde, bestimmt der Verschmutzungsgrad der Siebelemente 43 die an der Filtereinrichtung auftretende Druckdifferenz Δp und somit auch den Reinigungszyklus für die Siebelemente. Durch das schrittweise Weiterdrehen des Filterrades 1 gelangen frische Siebelemente bzw. Filtereinsätze in den Schmelzestrom. Die zugesetzten Siebelemente werden außerhalb des Hauptschmelzestroms nach Weiterdrehen des Filterrades 1 durch ein gepulstes Gegenstromverfahren gereinigt. Dabei wird eine Rückstoßdurchströmung angewandt, welche die im Siebelement kumulierten Schmutzpartikel löst und anschließend ausschwemmt. Je nach Porengröße der Siebelemente ist die Reinigung dieser Filtereinsätze mehrfach möglich. Nach mehreren Reinigungszyklen ist dann ein Austausch der Siebelemente notwendig. Aufgrund der hohen Betriebstemperaturen der Filtereinrichtung sind entsprechende Maßnahmen zur Vermeidung von Schäden am Filtersystem und der Kunststoffschmelze erforderlich. Es stellt nämlich aufgrund derhohen Temperaturen, die Oxidation der Kunststoffschmelze, die bevorzugt aus einem Monomer besteht, eventuell auch aus einem Polymer, ein besonderes Problem während des Austauschs der Siebelemente dar. Der Austausch der Siebelemente erfolgt über eine verschließbare Aus-/Einbauöffnung 29 in dem Gehäuse der Filtereinrichtung. Hierzu ist vorgesehen,daß im Bereich der Aus-/Einbauöffnung 29 meist zwei zueinander einen rechten Winkel bildende Zuführungsdüsen 34, 35 angeordnet sind, bei denen es sich um Rohre mit Umfangslöchern handelt. Durch diese Zuführungsdüsen in T-Form wird bevorzugt ein inertes Gas wie beispielsweise Stickstoff zugeführt, wobei ein räumlicher homogener Gasstrom und damit ein Gasvorhang vor der Aus-/Einbauöffnung 29 erzeugt wird. Das aus den Düsenöffnungen der T-förmigen Zuführungsdüsen 34, 35 ausströmende Gas erzeugt zwei sich überdeckende Gasschleier bzw. -vorhänge, die rechtwinklig zueinander verlaufen und über die Aus-/Einöffnung hinwegströmen, ohne daß Gas in diese Öffnung einströmt. Dadurch ist es möglich, ohne Oxidationsgefahr für die Kunststoffschmelze den Austausch der Siebelemente durchzuführen. Das Einblasen von Stickstoff in die Öffnung 29 muß vermieden werden, da ansonsten eine starke Abkühlung des Filterrades 1 und der Siebelemente erfolgen würde, was zur Erstarrung der Kunststoffschmelze führen könnte. Dies hätteunweigerlich die Undichtigkeit der Siebelemente und möglicherweise deren Zerstörung zur Folge.

Eine Kippvorrichtung 36, am Außenumfang des Gehäuses der Filtereinrichtung angebracht, ist schwenkbar. Der an einem Scharnier 32 angelenkte kleinere Schenkel der Kippvorrichtung 36 besitzt eine Länge kleiner als die Tiefe der Aus-/Einbauöffnung 29, die einen Verdrängerblock 30 aufnimmt und sich im vorderen Block 41 befindet. Der Verdrängerblock 30 ist mit einer Spindel 33 im Eingriff, die über ein Handrad 31 gedreht wird. Der längere Schenkel der Kippvorrichtung 36 deckt die Aus-/Einbauöffnung während des Filterbetriebs der Filtereinrichtung ab. Sobald ein Siebelement 43 gegen ein frisches Siebelement ausgetauscht werden soll, wird die Kippvorrichtung 36 um das Scharnier 32 von dem Filtergehäuse weggeschwenkt, wobei der Kontakt mit einer Verschlußkontrolle 37 in der Filtereinrichtung unterbrochen wird und über die Verschlußkontrolle 37 angezeigt wird, daß die Aus-/Einbauöffnung 29 geöffnet ist. Zugleich werden die Zuführungsdüsen 34, 35 mit Gas, beispielsweise Stickstoff, beaufschlagt, der über die Aus-/Einbauöffnung 29 wie zuvor beschrieben, hinwegströmt. Durch Drehen des Handrades 31 wird der Verdrängerblock 30 mittels der Spindel 33 aus der Aus-/Einbauöffnung 29 ausgefahren, so daß das auszuwechselnde Siebelement 43 entnommen und durch ein frisches Siebelement ersetzt werden kann. Nach dem erfolgten Wechsel des Siebelementes wird der Verdrängerblock wieder in die Aus-/Einbauöffnung 29 eingefahren, die Gaszufuhr über die Zuführungsdüsen 34, 35 abgeschaltet und die Aus-/Einbauöffnung 29 mit der beigeschwenkten Kippvorrichtung 36 verschlossen. Dieser Zustand wird durch die Verschlußkontrolle 37 in der Weise angezeigt, daß bei ausreichender Eindringtiefe des Verdrängerblocks 30 in die Aus/-Einbauöffnung 29 die Verschlußkontrolle 37 parallel zu der Spindel 33 ausgerichtet ist und bei zu geringer Eindringtiefe die Verschlußkontrolle schräg von der Spindel 33 absteht. Die Verschlußkontrolle 37 ist ein schwenkbarer Hebel, der am oberen Ende einen rechtwinkligen Einschnitt 53 aufweist, der an der Außenkante der Kippvorrichtung 36 anliegt. An Stelle einer mechanischen Verschlußkontrolle kann auch ein Überwachungssensor verwendet werden, der bei geöffneter Aus-/Einbauöffnung eine Anzeigeleuchte aufleuchten läßt, die bei geschlossener Aus-/Einbauöffnung erlischt.

Bevor ein Siebelement nach mehreren Filtrationszyklen ausgetauscht wird, erfolgt eine Rückspülung des Siebelements, um dieses weitgehend von Schmelze und anhaftenden Schmutzpartikeln zu reinigen. Erreicht wird dieses durch die Druckbeaufschlagung der in der Ausschleusleitung 23a strömenden Kunststoffschmelze mittels des in Fig. 1 gezeigten Accelerators 13. Wie aus Fig. 2 zu ersehen, wird die Ausschleusleitung 23a über die Pumpe 11 mit Schmelze versorgt und mündet im hinteren Block 40 in den Rückspülschlitz 22, der konisch zusammenläuft. Durch diese Formgebung des Rückspülschlitzes 22 ist ein hoher Rückspüldruck der Kunststoffschmelze gewährleistet, welche die zu reinigenden Siebelemente 43 in entgegengesetzter Rückspülrichtung zu der Durchflußrichtung während der Filtration durchströmt. Dadurch werden die in der Kavität befindliche Kunststoffschmelze und die am Siebelement 43 haftenden Schmutzpartikel herausgedrückt und durch die Schmelzerückführ-/Ausschleusleitung 23b abgeführt. Bei der in Fig. 2 gezeigten Stellung des Ausschleuskolbens 25 werden diese Rückstände über die Rückführleitung 24 wiederum in die in dieser Figur nicht gezeigte Schmelzezuflußleitung zurückgeführt und aufs Neue filtriert.

Im Ausschleuskolben 25 ist eine Mulde 49 eingefräst, über welche die Leitungen 23b und 24 miteinander in Verbindung stehen. Wird der Ausschleuskolben 25 ausgefahren, so bewegt sich die Mulde 49 von der Leitung 24 weg und unterbricht dadurch die Verbindung zwischen den Leitungen 23b und 24. Statt dessen wird die Leitung 23b direkt mit der in Fig. 2 nicht gezeigten Entsorgungsleitung 39 (s. Fig. 1) verbunden. Die ausgespülten Schmelzerückstände und Schmutzpartikel gelangen dann direkt in diese Entsorgungsleitung 39. Der Ausschleuskolben 25 erfüllt die gleiche Funktion wie das 3-Wegeventil in Fig. 1.

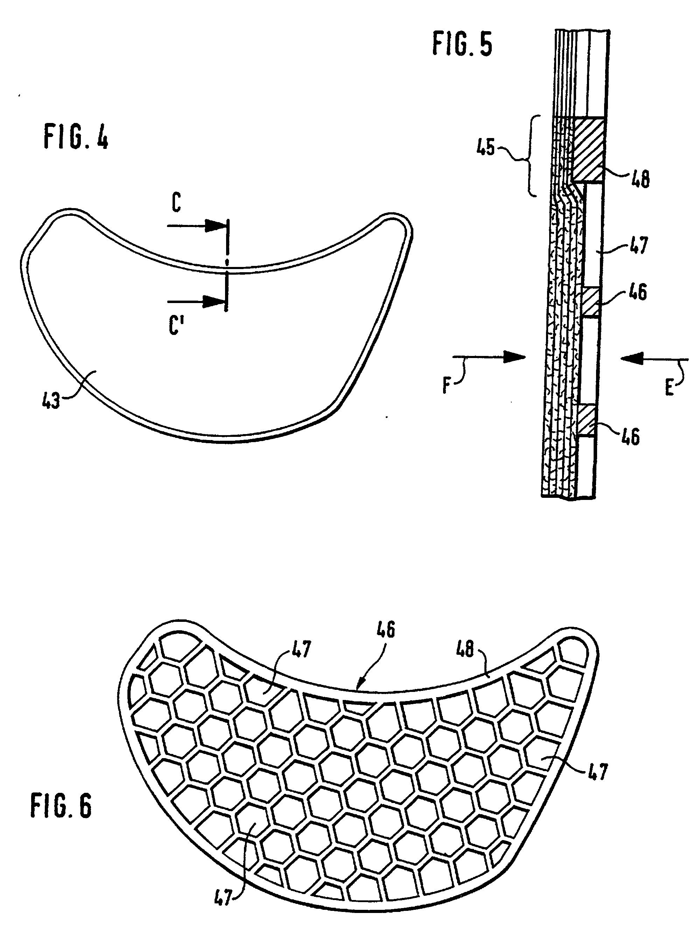

Fig. 4 zeigt ein Siebelement 43, das in einer Kavität 2 liegt, in Draufsicht. Das Siebelement 43 besteht aus mehreren Filterlagen, beispielsweise fünf Lagen, wobei die beiden äußeren Filterlagen jeweils eine größere Porenweite als die innenliegenden Filterlagen besitzen. Für die mittleren Filterlagen werden Filter je nach Reinheitsanforderung mit 6 bis 40 µm Porenweite verwendet.

Wie aus Fig. 5 ersichtlich ist, die einen Schnitt entlang der Linie C-C' der Fig. 4 wiedergibt, sind die Filterlagen am äußeren Rand zu einer Randverdichtung 45 zusammengepreßt, die eine geringere Stärke als die unverpreßten Filterlagen besitzt. In Spül- bzw. Filtrationsrichtung befindet sich auf der Schmelzzufuhrseite zu dem Siebelement 43 eine Vorlegeplatte 46, die zusammen mit dem Siebelement 43 ein Gesamtfilterpaket bildet, und als mechanische Abstützung bei der stoßartigen Rückspülreinigung dient.

In Fig. 5 zeigen der Pfeil E die Spül- bzw. Filtrationsrichtung und der Pfeil F die Rückspülrichtung an. Die Vorlegeplatte 46 besitzt einen Steg 48 an ihrem äußeren Rand, der so geformt ist, daß er bündig mit der Randverdichtung 45 der verpreßten Filterlagen abschließt. Der Querschnitt des Gesamtfilterpakets aus Vorlegeplatte 46 und Siebelement ist durchgehend rechteckig, so daß die Kavitäten 2 durch dieses Gesamtfilterpaket ebenflächig abgeschlossen sind.

An dem Siebelement 43 kann beispielsweise ein Grobsieb oder eine Lochplatte 52 anliegen, wie aus den Figuren 1 und 3 ersichtlich ist. Wie Fig. 6 zu entnehmen ist, besitzt die Vorlegeplatte 46 wabenförmige Öffnungen 47.

## Patentansprüche

1. Filtereinrichtung für die Reinigung von Kunststoffschmelzen, mit einem Filterrad (1) zum Ein- und Ausschwenken von Siebelementen (43) in bzw. aus einem von der Kunststoffschmelze durchströmten Schmelzekanal (44) in der Filtereinrichtung, wobei die Siebelemente in dem Filterrad angeordnete Kavitäten (2) abdecken und an einer Aus-/Einbauöffnung der Filtereinrichtung gegen frische oder gereinigte Siebelemente austauschbar sind, mit Drucksensoren (4, 5) in einer Schmelzezuflußleitung (9) vor dem Filterrad (1) und Drucksensoren (6, 7) in einer Schmelzeabflußleitung (10) nach dem Filterrad (1) wobei die Schmelzezu- und -abflußleitung (9, 10) jeweils mit dem Schmelzekanal (44) in der Filtereinrichtung in Verbindung stehen, **dadurch gekennzeichnet, daß** eine Schmelzerückführleitung (12) von der Schmelzeabflußleitung (10) abzweigt und über eine Pumpe (11) und eine Ausschleusleitung (23a) in einen Rückspülschlitz (22) in der Filtereinrichtung mündet, daß an die Ausschleusleitung (23a) ein Accelerator (13) zur stoßweisen Druckerhöhung angeschlossen ist,und daß eine weitere von der Filtereinrichtung wegführende Schmelzerückführ-/Ausschleusleitung (23b) über ein 3-Wegeventil (14) mit der Schmelzezuflußleitung (9) oder mit einer Entsorgungsleitung (39) verbunden ist.

2. Filtereinrichtung nach Anspruch 1, **dadurch gekennzeichnet, daß** die Filtereinrichtung zwei Blöcke (40, 41) aufweist, die durch dazwischen angeordnete Distanzplatten (42) auf Abstand gehalten und mittels Spannbolzen (26, 27, 28) miteinander verbunden sind, und daß in dem vorderen Block (41) die Aus-/Einbauöffnung (29) für die Siebelemente (43) angeordnet ist, die ein Verdrängerblock (30) verschließt, der über eine manuell betätigbare Spindel (33) in die Aus-/Einbauöffnung (29) hinein- und aus dieser herausbewegbar ist.

3. Filtereinrichtung nach Anspruch 2, **dadurch gekennzeichnet, daß** oberhalb einer Längsund Querkante der Aus-/Einbauöffnung (29) T-förmige Zuführungsdüsen (34, 35) mit über den Umfang verteilten Düsenlöchern angeordnet sind, die derart ausgerichtet sind, daß das ausströmende Gas zwei sich überdeckende Gasschleier bildet, die rechtwinkling zueinander verlaufen und über die Aus-/Einbauöffnung (29) hinwegströmen, ohne daß Gas in diese Öffnung (29) einströmt.

4. Filtereinrichtung nach Anspruch 2, **dadurch gekennzeichnet, daß** die Aus-/Einbauöffnung (29) von einer schwenkbaren Kippvorrichtung (36) verschlossen ist, deren Schließ- und Offenstellung eine Verschlußkontrolle (37) überwacht.

5. Filtereinrichtung nach Anspruch 1, **dadurch gekennzeichnet, daß** ein Antriebkolben (15) über eine Wippe (16) und eine Zug-/Druckstange (18) mit einer Ratsche (20) verbunden ist, die ein Ritzel (51) antreibt, das mit einem Zahnkranz (38) am Außenumfang des Filterrades (1) kämmt.

6. Filtereinrichtung nach Anspruch 2, **dadurch gekennzeichnet, daß** sich in dem vorderen Block (41) in der Aus-/Einbauöffnung (29) der Verdrängerblock (30) befindet, der mit der Spindel (33) im Eingriff ist, die über ein Handrad (31) betätigbar ist, um den Verdrängerblock (30) aus der Aus-/Einbauöffnung (29) herauszubewegen oder in diese hineinzubewegen.

7. Filtereinrichtung nach Anspruch 4, **dadurch gekennzeichnet, daß** die Kippvorrichtung (36) an einem Scharnier (32) angelenkt ist und zur Freigabe der Aus-/Einbauöffnung (29) um das Scharnier (32) schwenkbar ist.

8. Filtereinrichtung nach Anspruch 4, **dadurch gekennzeichnet, daß** die Verschlußkontrolle (37) ein schwenkbarer Hebel ist, der parallel zu der Spindel (33) angeordnet ist und einen Einschnitt (53) aufweist, der an der Außenkante der Kippvorrichtung (36) anliegt, wenn der Verdrängerblock (30) ausreichend tief in die Aus-/Einbauöffnung (29) eingefahren ist.

9. Filtereinrichtung nach Anspruch 1, **dadurch gekennzeichnet, daß** das einzelne Siebelement (43) aus einem mehrlagigen Filtergewebe besteht, von dem die beiden äußeren Filterlagen eine größere Porenweite als die innenliegenden Filterlagen besitzen und daß die Filterlagen des Filtergewebes am äußeren Rand zu einer Randverdichtung (45) miteinander verpreßt und abgedichtet sind.

10. Filtereinrichtung nach Anspruch 9, **dadurch gekennzeichnet, daß** die mittleren Lagen eine Porenweite von 6 bis 40 µm aufweisen.

11. Filtereinrichtung nach Anspruch 9, **dadurch gekennzeichnet, daß** vor jedem Siebelement (43) in Spülrichtung eine Vorlegeplatte (46) angeordnet ist, die wabenförmige Öffnungen (47) aufweist, daß an der Vorlegeplatte (46) am Rand ein Steg (48) vorhanden ist, der bündig mit der Randverdichtung (45) der verpreßten Filterlagen abschließt und daß der Querschnitt des Gesamtfilterpakets aus Vorlegeplatte (46) und Siebelement (43) durchgehend rechteckig ist.

12. Filtereinrichtung nach Anspruch 1, **dadurch gekennzeichnet, daß** die Kavitäten (2) einen nierenförmigen Umriß aufweisen und daß jeweils drei nebeneinanderliegende Kavitäten in dem trichterförmig aufgeweiteten Schmelzekanal (44) eingeschwenkt sind.

13. Filtereinrichtung nach den Ansprüchen 9 und 12, **dadurch gekennzeichnet, daß** das Siebelement (43) einen nierenförmigen Umriß besitzt, der sich mit demUmriß der Kavitäten (2) deckt.

## Claims

1. A filter device for cleaning plastics melts, having a filter wheel (1) for pivoting screening elements (43) in and out of a melt channel (44) through which a plastics melt flows in the filter device, the screening elements covering cavities (2) arranged in the filter wheel, and being exchangeable for fresh or cleaned screening elements at a removal/fitting opening of the filter device, wherein pressure sensors (4, 5) are arranged in a melt inflow line (9) upstream of the filter wheel (1) and pressure sensors (6, 7) are arranged in a melt outflow line (10) downstream of the filter wheel (1), wherein the melt inflow and outflow lines (9, 10) are respectively in connection with the melt channel (44) in the filter device, **characterized in that** a melt return line (12) branches off from the melt outflow line (10) and opens out via a pump (11) and a discharge line (23a) into a backflushing slot (22) in the filter device, **in that** an accelerator (13) is connected to the discharge line (23a) for increasing pressure in surges, and **in that** a further melt return/discharge line (23b), leading away from the filter device, is connected via a 3-way valve (14) to the melt inflow line (9) or to a disposal line (39).

2. The filter device as claimed in claim 1, wherein the filter device has two blocks (40, 41), which are kept at a distance by spacer plates (42) arranged in between and are connected to each other by means of clamping bolts (26, 27 28), and wherein in the front block (41) there is arranged the removal/fitting opening (29) for the screening elements (43), which is closed by a displacement block (30) which can be moved into and out of the removal/fitting opening (29) by means of a manually actuable spindle (33).

3. The filter device as claimed in claim 2, wherein T-shaped feed nozzles (34, 35) with nozzle holes distributed around the circumference are arranged above a longitudinal and transverse edge of the rem oval/fitting opening (29) and are aligned in such a way that the gas flowing out forms two overlapping gas veils, which extend at right angles with respect to each other and flow away via the removal/fitting opening (29) without gas flowing into this opening (29).

4. The filter device as claimed in claim 2, wherein the removal/fitting opening (29) is closed by a pivotable tilting device (36), the closing and opening positions of which are monitored by a closure control (37).

5. The filter device as claimed in claim 1, wherein a drive piston (15) is connected via a rocker (16) and a pulling/pushing rod (18) to a ratchet (20), which drives a pinion (51) which meshes with a toothed rim (38) on the outer circumference of the filter wheel (1).

6. The filter device as claimed in claim 2, wherein, in the front block (41), the displacement block (30) is located in the removal/fitting opening (2) and is in engagement with the spindle (33), which can be actuated via a hand wheel (31) in order to move the displacement block (30) out of or into the removal/fitting opening (29).

7. The filter device as claimed in claim 4, wherein the tilting device (36) is articulated at a hinge (3 2) and can be pivoted about the hinge (32) for exposing the removal/fitting opening (29).

8. The filter device as claimed in claim 4, wherein the closure control (37) is a pivotable lever which is arranged parallel to the spindle (33) and has an incision (53) which bears against the out edge of the tilting device (36) when the displacement block (30) has entered to an adequate depth into the removal/fitting opening (29).

9. The filter device as claimed in claim 1, wherein the individual screening element (43) comprises a multilayer woven filter fabric, of which the two outer filter layers have a greater pore width than the inner filter layers and wherein the filter layers of the woven filter fabric are compressed together and sealed at the outer edge to form an edge compression (45).

10. The filter device as claimed in claim 9, wherein the middle layers have a pore width of 6 to 40 µm.

11. The filter device as claimed in claim 9, wherein a wall plate (46) which has honeycomb-shaped openings (47) is arranged upstream of each screening element (43) in the direction of flushing, wherein at the edge of the wall plate (46) there is a web (48), which terminates flush with the edge compression (45) of the compressed filter layers, and wherein the cross section of the complete filter pack comprising wall plate (46) and screening element (43) is rectangular throughout.

12. The filter device as claimed in claim 1, wherein the cavities (2) have a kidney-shaped outline and wherein there are three adjacent cavities at a time pivoted into the melt channel (44) widened in a funnel-shaped manner.

13. The filter device as claimed in claims 9 and 12, wherein the screening element (43) as a kidney-shaped outline which is congruent with the outline of the cavities (2).

## Revendications

1. Dispositif de filtration pour la purification de matières plastiques fondues, avec une roue de filtration (1) pour faire pivoter des éléments de tamisage (43) respectivement dans ou à l'écart d'un canal de matière fondue (44) à travers lequel la matière plastique fondue s'écoule et qui est disposé dans le dispositif de filtration, les éléments de tamisage recouvrant des cavités (2) disposées dans la roue de filtration et pouvant être remplacés, par une ouverture de démontage/remontage du dispositif de filtration, par des éléments de tamisage neufs ou nettoyés, avec des capteurs de pression (4, 5) disposés dans une conduite (9) d'arrivée de matière fondue en amont de la roue de filtration (1) et avec des capteurs de pression (6, 7) disposés dans une conduite (10) de sortie de matière fondue en aval de la roue de filtration (1), les conduites (9, 10) d'arrivée et de sortie de matière fondue étant respectivement reliées au canal de matière fondue (44) du dispositif de filtration, **caractérisé en ce qu'**une conduite de retour de matière fondue (12) bifurque de la conduite (10) de sortie de matière fondue et débouche, en passant par une pompe (11) et une conduite d'évacuation (23a), dans une fente (22) de rinçage à contre-courant (22) du dispositif de filtration, **en ce qu'**un accélérateur (13) est raccordé à la conduite d'évacuation (23a) pour augmenter la pression par à-coups, et **en ce qu'**une autre conduite (23b) d'évacuation/de retour de matière fondue, partant du dispositif de filtration, est reliée par l'intermédiaire d'une vanne (14) à trois voies à la conduite (9) d'arrivée de matière fondue ou à une conduite d'élimination (39).

2. Dispositif de filtration selon la revendication 1, **caractérisé en ce que** le dispositif de filtration présente deux blocs (40, 41) qui sont maintenus à distance par des plaques d'écartement intercalées (42) et qui sont mutuellement assemblés au moyen de boulons de serrage (26, 27, 28), et **en ce que** l'ouverture de démontage/remontage (29) pour les éléments de tamisage (43) est disposée dans le bloc antérieur (41), ouverture qui est fermée par un bloc refouleur (30) qui, au moyen d'une broche filetée (33) à actionnement manuel, peut être déplacé dans et hors de l'ouverture de démontage/remontage (29).

3. Dispositif de filtration selon la revendication 2, **caractérisé en ce que** des buses d'alimentation (34, 35) en forme de T sont disposées au-dessus d'un bord longitudinal et d'un bord transversal de l'ouverture de démontage/remontage (29), lesquelles sont pourvues de trous de buses, répartis sur leur périphérie, qui sont orientés de telle sorte que le gaz dégagé forme deux rideaux de gaz en recouvrement mutuel, qui s'étendent à angle droit entre eux et s'évacuent au-delà de l'ouverture de démontage/remontage (29) sans que du gaz pénètre dans cette ouverture (29).

4. Dispositif de filtration selon la revendication 2, **caractérisé en ce que** l'ouverture de démontage/remontage (29) est fermée par un dispositif basculant (36) pouvant pivoter, dont la position fermée ou ouverte est surveillée par un témoin de fermeture (37).

5. Dispositif de filtration selon la revendication 1, **caractérisé en ce qu'**un piston d'entraînement (15) est relié par l'intermédiaire d'un culbuteur (16) et d'une tige de traction/compression (18) à un cliquet (20) qui entraîne un pignon (51) qui engrène avec une couronne dentée (38) sur la circonférence extérieure de la roue de filtration (1).

6. Dispositif de filtration selon la revendication 2, **caractérisé en ce que** le bloc refouleur (30) se trouve dans l'ouverture de démontage/remontage (29) dans le bloc antérieur (41), et il est en prise avec la broche (33) qui peut être actionnée au moyen d'un volant (31) pour déplacer le bloc refouleur (30) hors de l'ouverture de démontage/remontage (29) ou dans cette ouverture.

7. Dispositif de filtration selon la revendication 4, **caractérisé en ce que** le dispositif basculant (36) est articulé sur une charnière (32) et peut être pivoté autour de la charnière (32) en vue de libérer l'ouverture de démontage/remontage (29).

8. Dispositif de filtration selon la revendication 4, **caractérisé en ce que** le témoin de fermeture (37) est un levier pivotant qui est disposé parallèlement à la broche filetée (33) et présente une encoche (53) qui s'applique contre le bord extérieur du dispositif basculant (36) lorsque le bloc refouleur (30) est rentré suffisamment profondément dans l'ouverture de démontage/remontage (29).

9. Dispositif de filtration selon la revendication 1, **caractérisé en ce que** chaque élément de tamisage (43) est constitué d'un tissu filtrant multicouche, dont les deux couches filtrantes extérieures présentent une plus grande taille de pores que les couches filtrantes intérieures, et **en ce que** les couches filtrantes du tissu filtrant sont, sur le bord extérieur, pressées ensemble et étanchées pour former une garniture d'étanchéité de bord (45).

10. Dispositif de filtration selon la revendication 9, **caractérisé en ce que** les couches intermédiaires présentent une taille de pores de 6 à 40 µm.

11. Dispositif de filtration selon la revendication 9, **caractérisé en ce qu'**une plaque d'appui (46) qui présente des ouvertures (47) en nid d'abeilles est disposée avant chaque élément de tamisage (43) dans la direction d'écoulement, **en ce qu'**une barrette (48) qui se termine en affleurement avec la garniture d'étanchéité de bord (45) des couches filtrantes pressées ensemble est présente sur le bord de la plaque d'appui (46), et **en ce que** la section du filtre complet constitué de la plaque d'appui (46) et de l'élément de tamisage (43) est continûment rectangulaire.

12. Dispositif de filtration selon la revendication 1, **caractérisé en ce que** les cavités (2) présentent un contour réniforme, et **en ce que** trois cavités juxtaposées sont chaque fois pivotées dans le canal de matière fondue (44) élargi en entonnoir.

13. Dispositif de filtration selon les revendications 9 et 12, **caractérisé en ce que** l'élément de tamisage (43) possède un contour réniforme qui coïncide avec celui des cavités (2).
